# EUROPEAN PATENT APPLICATION

(11) **EP 4 644 307 A1**
(43) Date of publication of application: **05.11.2025**
(21) Application number: 25731161.3
(22) Date of filing: 07.01.2025
(51) Int. Cl.: B65H 39/14

(54) **ADJUSTMENT MECHANISM FOR THERMALLY COMPOUNDED ELECTRODE SHEET, AND ELECTRODE SHEET THERMAL-COMPOUNDING DEVICE**

(30) Priority: 26.07.2024 CN 202421804374 U
(71) Applicant: Eve Power Co., Ltd., Jingmen, Hubei 448000 (CN)
(72) Inventor: YUE, Mingqiang, Jingmen, Hubei 448000 (CN); ZHOU, Guhua, Jingmen, Hubei 448000 (CN); HU, Xiaolong, Jingmen, Hubei 448000 (CN); JIANG, Congcong, Jingmen, Hubei 448000 (CN); GUAN, Lin, Jingmen, Hubei 448000 (CN); MA, Xifeng, Jingmen, Hubei 448000 (CN); PENG, Aicheng, Jingmen, Hubei 448000 (CN); WANG, Shifeng, Jingmen, Hubei 448000 (CN)
(74) Representative: Biallo, Dario
(86) International application number: PCT/CN2025/071003
(87) International publication number: WO 2025/124608

(57) **Abstract**

An electrode sheet thermal-lamination adjustment mechanism includes a feeding assembly, a deviation correction assembly, and a visual recognition assembly. The feeding assembly includes a feeding platform. A discharge end of the feeding platform faces an incoming material strip. The incoming material strip includes a separator strip and a first electrode sheet disposed within the separator strip. The deviation correction assembly is in transmission connection with the feeding platform. The deviation correction assembly includes a first deviation correction member, a second deviation correction member, and a third deviation correction member. The first deviation correction member is configured to adjust the adjustment position of the second electrode sheet along an X direction. The second deviation correction member and the third deviation correction member are each configured to adjust the adjustment position of the second electrode sheet along a Y direction. The second deviation correction member and the third deviation correction member are sequentially disposed along the X direction. The X direction is parallel with the conveying direction of the second electrode sheet. The Y direction is perpendicular to the X direction. The X direction and the Y direction are in the same plane. The visual recognition assembly faces the feeding platform. The visual recognition assembly is configured to perform visual recognition on the second electrode sheet on the feeding platform.

## Description

This application claims priority to Chinese Patent Application No. 202421804374.4 filed with the China National Intellectual Property Administration (CNIPA) on Jul. 26, 2024, the disclosure of which is incorporated herein by reference in its entirety.

### TECHNICAL FIELD

This application relates to the field of electrode sheet manufacturing equipment, for example an electrode sheet thermal-lamination adjustment mechanism and an electrode sheet thermal-lamination device.

### BACKGROUND

In an existing thermal-lamination process, it is usual practice to cut a negative electrode sheet, feed the negative electrode sheet into between two separators, use a thermal-lamination roller to apply heat and pressure to the negative electrode sheet to laminate the negative electrode sheet to the separators, cut the positive electrode sheet to smaller negative electrode sheets of the same width, use a feeding assembly to feed the smaller negative electrode sheets alternately to upper and lower surfaces of a thermal-lamination laminated strip, and then use the thermal-lamination roller to perform lamination. Both the feeding of the positive and negative electrode sheets and the movement of the separator strip are at a high speed. Thus, extremely high precision is required for the feeding of the electrode sheets.

### SUMMARY

### TECHNICAL PROBLEM

In the related art, conventional equipment lacks a monitoring mechanism before the feeding of the electrode sheet, making it impossible to detect and correct sheet deviation in a timely manner. Moreover, deviation of the electrode sheet in the movement direction is typically considered only in terms of a single direction, preventing the monitoring and correction of deviations in multiple directions-such as deviations on the left and right sides relative to the movement direction of the electrode sheet-before the feeding of the electrode sheet. As a result, it is difficult to accurately control the degree of alignment after the feeding of the positive and negative electrode sheets and before thermal lamination, leading to poor alignment of the positive and negative electrode sheets within the battery cell and thus causing problems such as powder shedding, lithium precipitation, and poor performance consistency.

### TECHNICAL SOLUTION

This application provides an electrode sheet thermal-lamination adjustment mechanism. The electrode sheet thermal-lamination adjustment mechanism includes a feeding assembly, a deviation correction assembly, and a visual recognition assembly. The feeding assembly includes a feeding platform. A discharge end of the feeding platform faces an incoming material strip. The incoming material strip includes a separator strip and a first electrode sheet disposed within the separator strip. The deviation correction assembly is in transmission connection with the feeding platform to adjust the position of a second electrode sheet on the feeding platform. The deviation correction assembly includes a first deviation correction member, a second deviation correction member, and a third deviation correction member. The first deviation correction member is configured to adjust the adjustment position of the second electrode sheet along an X direction. The second deviation correction member and the third deviation correction member are each configured to adjust the adjustment position of the second electrode sheet along a Y direction. The second deviation correction member and the third deviation correction member are sequentially disposed along the X direction. The X direction is parallel with the conveying direction of the second electrode sheet. The Y direction is perpendicular to the conveying direction of the second electrode sheet. The X direction and the Y direction are in the same plane. The visual recognition assembly faces the feeding platform. The visual recognition assembly is configured to perform visual recognition on the second electrode sheet on the feeding platform. The visual recognition assembly is connected to the deviation correction assembly.

This application also provides an electrode sheet thermal-lamination device. The electrode sheet thermal-lamination device includes a frame and the electrode sheet thermal-lamination adjustment mechanism. The electrode sheet thermal-lamination adjustment mechanism is mounted on the frame.

### BENEFICIAL EFFECTS

In the electrode sheet thermal-lamination adjustment mechanism of this application, the feeding platform of the feeding assembly conveys the second electrode sheet to the corresponding position of the first electrode sheet on the incoming material strip so that the first electrode sheet and the second electrode sheet (separated by the separator strip) are bonded and then hot-laminated by the thermal-lamination assembly to form a laminated material strip. In the process where the feeding assembly feeds the second electrode sheet, the visual recognition assembly recognizes the position of the second electrode sheet on the feeding platform, compares this position with reference template parameters within the visual recognition assembly, and if a deviation exists, the visual recognition assembly sends a deviation correction signal to the deviation correction assembly. The deviation correction assembly adjusts the feeding platform to correct the position of the first electrode sheet on the feeding platform, ensuring that the second electrode sheet is accurately conveyed by the feeding assembly to the corresponding position on the incoming material strip. This prevents feeding errors, helps guarantee precise alignment between the first and second electrode sheets in the laminated material strip after hot lamination, thereby avoiding problems such as powder shedding and lithium precipitation of the product and improving the performance consistency of the product.

The deviation correction assembly of this application includes a first deviation correction member, a second deviation correction member, and a third deviation correction member. The first deviation correction member is configured to adjust the adjustment position of the second electrode sheet along an X direction. The second deviation correction member and the third deviation correction member are each configured to adjust the adjustment position of the second electrode sheet along a Y direction. The second deviation correction member and the third deviation correction member are sequentially disposed along the X direction. The X direction is parallel with the conveying direction of the second electrode sheet. The Y direction is perpendicular to the conveying direction of the second electrode sheet 220. The X direction and the Y direction are in the same plane, thereby enabling three-axis adjustment of the second electrode sheet in the plane so that the second electrode sheet on the feeding platform can be adjusted in position by translation or rotation by any angle in the plane to align with the reference position, thereby achieving precise deviation correction and adjustment.

### BRIEF DESCRIPTION OF THE DRAWINGS

FIG. 1 is a diagram illustrating the structure of an electrode sheet thermal-lamination device according to some embodiments of this application.
FIG. 2 is a plan view illustrating the structure of an electrode sheet thermal-lamination adjustment mechanism according to some embodiments of this application.
FIG. 3 is a diagram illustrating the structure of a deviation correction assembly in a first driving state according to some embodiments of this application.
FIG. 4 is a diagram illustrating the structure of a deviation correction assembly in a second driving state according to some embodiments of this application.
FIG. 5 is a diagram illustrating the structure of a deviation correction assembly in a third driving state according to some embodiments of this application.
FIG. 6 is a diagram illustrating the structure of a deviation correction assembly in a fourth driving state according to some embodiments of this application.
FIG. 7 is a diagram illustrating the structure of a deviation correction assembly in a fifth driving state according to some embodiments of this application.
FIG. 8 is a diagram illustrating the structure of a visual recognition assembly according to some embodiments of this application.
FIG. 9 is a diagram illustrating the structure of an imaging range of a visual recognition assembly on a second electrode sheet according to some embodiments of this application.
FIG. 10 is a diagram illustrating the structure of an initial incoming material strip according to some embodiments of this application.
FIG. 11 is a diagram illustrating the position relationship between a second electrode sheet and an incoming material strip according to some embodiments of this application.

### Reference list

1. frame; 100. thermal-lamination assembly; 1100. body; 110. feeding assembly; 1101. first feeder; 1102. second feeder; 120. deviation correction assembly; 121. first deviation correction member; 1211. first deviation correction motor; 122. feeding platform; 1221. platform center; 1222. arbitrary point on the platform; 123. second deviation correction member; 1231. second deviation correction motor; 124. third deviation correction member; 1241. third deviation correction motor; 125. feeding clamp; 1251. first clamping plate; 1252. second clamping plate; 1220. first driving member; 1250. second driving member; 130. visual recognition assembly; 131. visual camera; 1311. first camera; 1312. second camera; 132. light source; 133. imaging range; 140. first incoming roller; 150. second incoming roller; 160. first thermal-lamination roller; 170. second thermal-lamination roller; 200a. incoming material strip; 200b. laminated material strip; 210. separator strip; 220. second electrode sheet; 230. first electrode sheet; 300. incoming guide assembly; 310. first deviation correction direction; 320. second deviation correction direction; 330. third deviation correction direction; 340. X direction; 350. Y direction; 400. reference position

### DETAILED DESCRIPTION

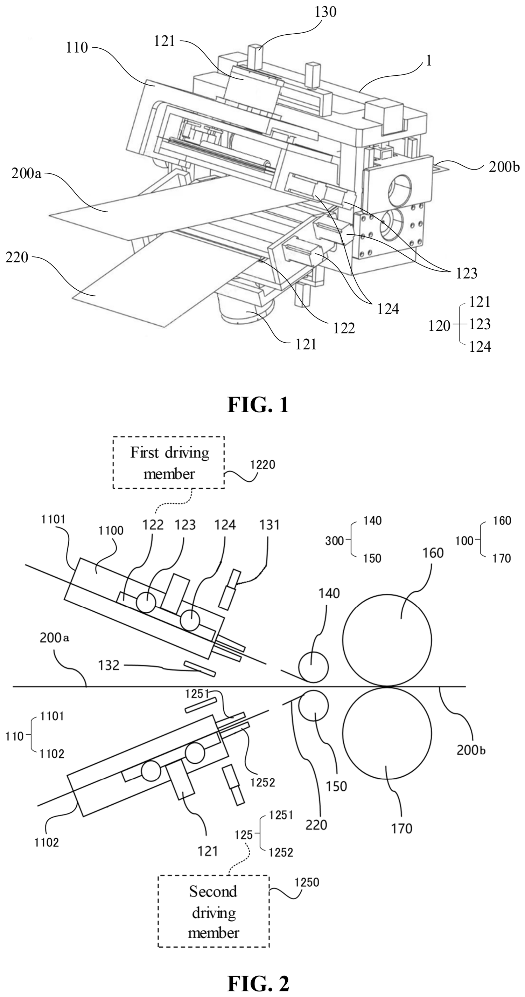

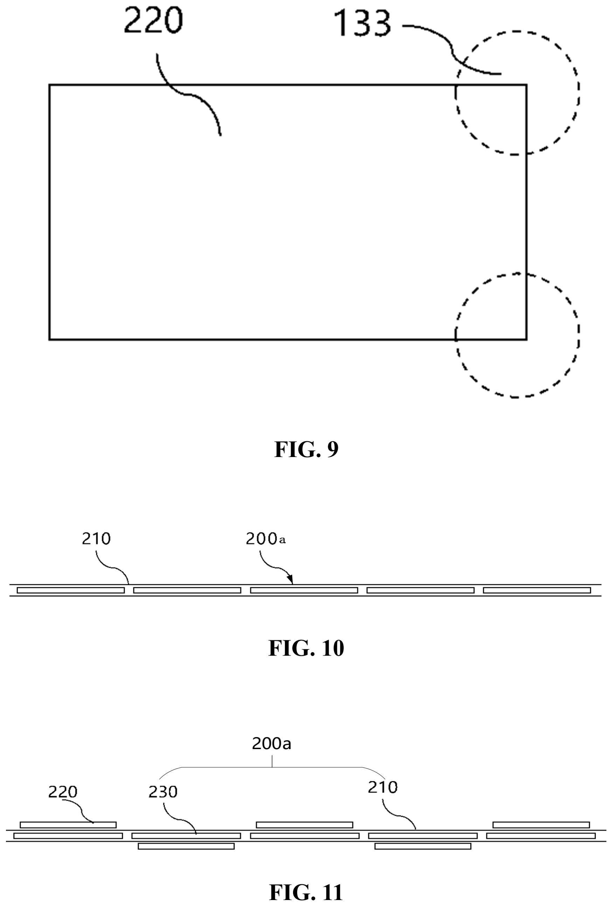

As shown in FIGS. 1 to 11, the electrode sheet thermal-lamination adjustment mechanism of this embodiment includes a feeding assembly 110, a deviation correction assembly 120, and a visual recognition assembly 130. The feeding assembly 110 includes a feeding platform 122. A discharge end of the feeding platform 122 faces an incoming material strip 200a. As shown in FIG. 11, the incoming material strip 200a includes a separator strip 210 and a first electrode sheet 230 disposed within the separator strip 210. The deviation correction assembly 120 is in transmission connection with the feeding platform 122 to adjust the position of a second electrode sheet 220 on the feeding platform 122. The deviation correction assembly 120 includes a first deviation correction member 121, a second deviation correction member 123, and a third deviation correction member 124. The first deviation correction member 121 is configured to adjust the adjustment position of the second electrode sheet 220 along an X direction 340. The second deviation correction member 123 and the third deviation correction member 124 are each configured to adjust the adjustment position of the second electrode sheet 220 along a Y direction 350. The second deviation correction member 123 and the third deviation correction member 124 are sequentially disposed along the X direction 340. The X direction 340 is parallel with the conveying direction of the second electrode sheet 220. The Y direction 350 is perpendicular to the conveying direction of the second electrode sheet 220. The X direction 340 and the Y direction 350 are in the same plane. The visual recognition assembly 130 faces the feeding platform 122 and is configured to perform visual recognition on the second electrode sheet 220 on the feeding platform 122. The visual recognition assembly 130 is connected to the deviation correction assembly 120.

In this embodiment, the feeding platform 122 of the feeding assembly 110 conveys the second electrode sheet 220 to the corresponding position of the first electrode sheet 230 on the incoming material strip 200a so that the first electrode sheet 230 and the second electrode sheet 220 (separated by the separator strip 210) are bonded and then hot-laminated by the thermal-lamination assembly to form a laminated material strip 200b. In the process where the feeding assembly 110 feeds the second electrode sheet 220, the visual recognition assembly 130 recognizes the position of the second electrode sheet 220 on the feeding platform 122, compares this position with reference template parameters within the visual recognition assembly 130, and if a deviation exists, sends a deviation correction signal to the deviation correction assembly 120. The deviation correction assembly 120 adjusts the feeding platform 122 to correct the position of the first electrode sheet 230 on the feeding platform 122, ensuring that the second electrode sheet 220 is accurately conveyed by the feeding assembly 110 to the corresponding position on the incoming material strip 200a. This prevents feeding errors, helps guarantee precise alignment between the first electrode sheet 230 and the second electrode sheet 220 in the laminated material strip 200b after hot lamination, thereby avoiding problems such as powder shedding and lithium precipitation of the product and improving the performance consistency of the product.

The deviation correction assembly 120 includes a first deviation correction member 121, a second deviation correction member 123, and a third deviation correction member 124. The first deviation correction member 121 is configured to adjust the adjustment position of the second electrode sheet 220 along the X direction 340. The second deviation correction member 123 and the third deviation correction member 124 are each configured to adjust the adjustment position of the second electrode sheet 220 along the Y direction 350. The second deviation correction member 123 and the third deviation correction member 124 are sequentially disposed along the X direction 340. The X direction 340 is parallel with the conveying direction of the second electrode sheet 220. The Y direction 350 is perpendicular to the conveying direction of the second electrode sheet 220. The X direction 340 and the Y direction 350 are in the same plane, thereby enabling three-axis adjustment of the second electrode sheet 220 in the plane so that the second electrode sheet 220 on the feeding platform 122 can be adjusted in position by translation or rotation by any angle in the plane to align with the reference position 400, thereby achieving precise deviation correction and adjustment.

In a possible embodiment, the visual recognition assembly 130 includes a vision camera 131. The second electrode sheet 220 is rectangular. Any two corners of the second electrode sheet 220 are located within the imaging range 133 of the vision camera 131. For the rectangular second electrode sheet 220, the visual camera 131 captures the positions of any two corners of the second electrode sheet 220 and ensures that the positions of any two corners of the second electrode sheet 220 are aligned with the corresponding reference position 400. The remaining two corners of the second electrode sheet 220 are naturally aligned with the corresponding reference position 400, thereby ensuring that the position of the second electrode sheet 220 is aligned with the corresponding reference position 400.

In a possible embodiment, two corners of the second electrode sheet 220 on the same side of the second electrode sheet 220 are located within the imaging range 133 of the vision camera 131. In practical operation, capturing the two corners of the second electrode sheet 220 on the same side of the second electrode sheet 220 using the visual camera 131 is advantageous in reducing the imaging range 133 of the visual camera 131, thereby avoiding the need to use a larger visual camera 131 or to increase the distance between the visual camera 131 and the second electrode sheet 220 to achieve a wider imaging range 133. This helps reduce the equipment investment cost.

In a possible embodiment, the visual camera 131 includes two first cameras 1311 for capturing the positions of two corners of the second electrode sheet 220, thereby enabling more flexible installation and arrangement of the visual camera 131. The two corners of the second electrode sheet 220 on the front side of the second electrode sheet 220 along the conveying direction of the second electrode sheet 220 are located within the imaging ranges 133 of the two first cameras 1311 in a one to one manner. When the feeding assembly 110 feeds the second electrode sheet 220, the two corners of the second electrode sheet 220 on the front side of the second electrode sheet 220 along the conveying direction of the second electrode sheet 220 first enter the feeding platform 122 and enter the imaging ranges 133 of the first cameras 1311. As a result, the first cameras 1311 can capture the second electrode sheet 220 in a timely manner and transmit signals to the deviation correction assembly 120 so that the deviation correction assembly 120 can quickly perform timely deviation correction adjustment on the position of the second electrode sheet 220.

The visual camera 131 also includes two second cameras 1312. The two corners of the second electrode sheet 220 on the rear side of the second electrode sheet 220 along the conveying direction of the second electrode sheet 220 are located within imaging ranges 133 of the two second cameras 1312 in a one to one manner. This is used for recapturing and detection after deviation correction adjustment of the second electrode sheet 220. Specifically, the first cameras 1311 first capture and detect the two corners of the second electrode sheet 220 on the front side of the second electrode sheet 220 along the conveying direction of the second electrode sheet 220, the deviation correction assembly 120 performs deviation correction adjustment on the position of the second electrode sheet 220 to align the second electrode sheet 220 with the reference position. Then, the second cameras 1312 recapture and detect the two corners of the second electrode sheet 220 on the rear side of the second electrode sheet 220 along the conveying direction of the second electrode sheet 220 to confirm that the second electrode sheet 220 has been accurately aligned with the reference position 400 under the adjustment of the deviation correction assembly 120. Finally, the second electrode sheet 220 is conveyed onto the incoming material strip 200a, ensuring precise feeding of the second electrode sheet 220, ensuring that the second electrode sheet 220 is aligned with the first electrode sheet 230 on the incoming material strip 200a, and thus ensuring the quality of the laminated material strip 200b obtained after hot lamination.

In a possible embodiment, the visual recognition assembly 130 also includes an imaging light source 132. The vision camera 131 and the imaging light source 132 are disposed inside the housing of the feeding assembly 110. The vision camera 131 and the imaging light source 132 are spaced apart to form a gap for the second electrode sheet 220 to pass through. Since the space for conveying the second electrode sheet 220 inside the housing of the feeding assembly 110 is limited in an actual apparatus, the interior of the housing tends to be relatively dark. The imaging light source 132 inside the housing ensures the clarity of the images captured by the visual camera 131, thereby improving the accuracy of visual recognition and detection.

In a possible embodiment, the feeding assembly 110 also includes a body 1100 and a first driving member 1220. The feeding platform 122 is movably disposed on the body 1100. The first driving member 1220 is configured to drive the feeding platform 122 to move to convey the second electrode sheet 220 to the incoming material strip 200a. The first driving member 1220 drives the feeding platform 122 to move on the body 1100 to convey the second electrode sheet 220 on the feeding platform 122 to the incoming material strip 200a and complete the feeding operation of the second electrode sheet 220.

In a possible embodiment, the feeding assembly 110 also includes a second driving member 1250 and a feeding clamp 125. The feeding clamp 125 is disposed between the feeding platform 122 and the incoming material strip 200a. The second driving member 1250 is configured to drive the feeding clamp 125 to clamp or release the second electrode sheet 220 to convey the second electrode sheet 220 on the feeding platform 122 to the incoming material strip 200a. The feeding clamp 125 includes a first clamping plate 1251 and a second clamping plate 1252. The first clamping plate 1251 and the second clamping plate 1252 clamp and support the second electrode sheet 220, allowing the second electrode sheet 220 to be steadily and smoothly placed onto the incoming material strip 200a, ensuring the flatness of the second electrode sheet 220 and the alignment between the second electrode sheet 220 and the corresponding position on the incoming material strip 200a, and thus ensuring the quality of the laminated material strip 200b obtained after hot lamination.

In this application, the first driving member 1220 and the second driving member 1250 may be driving devices and structures such as motors, cylinders, or hydraulic cylinders as long as the driving actions required in this application can be achieved. This is not limited in this application.

In actual operation, the first deviation correction member 121 includes a first deviation correction motor 1211 configured to drive the feeding platform 122 to move along a first deviation correction direction 310; the second deviation correction member 123 includes a second deviation correction motor 1231 configured to drive the feeding platform 122 to move along a second deviation correction direction 320; and the third deviation correction member 124 includes a third deviation correction motor 1241 configured to drive the feeding platform 122 to move along a third deviation correction direction 330.

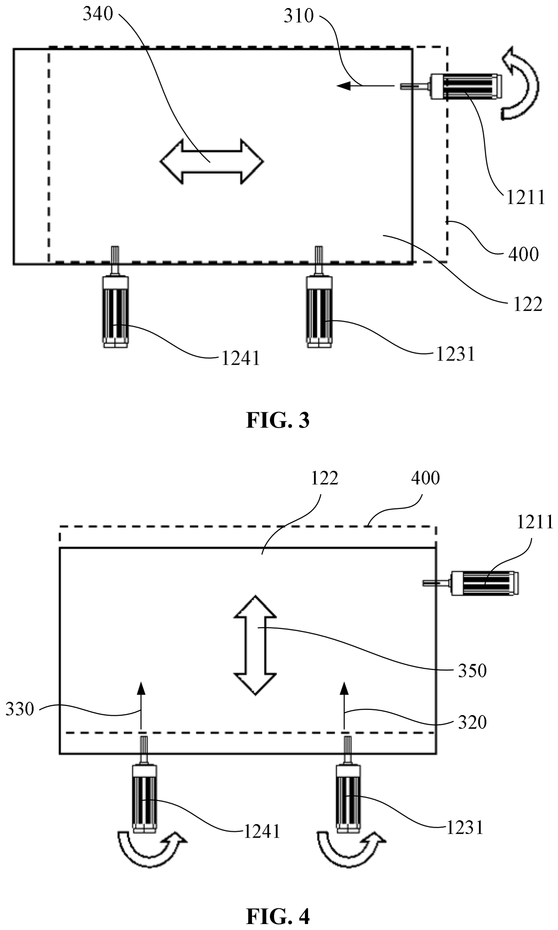

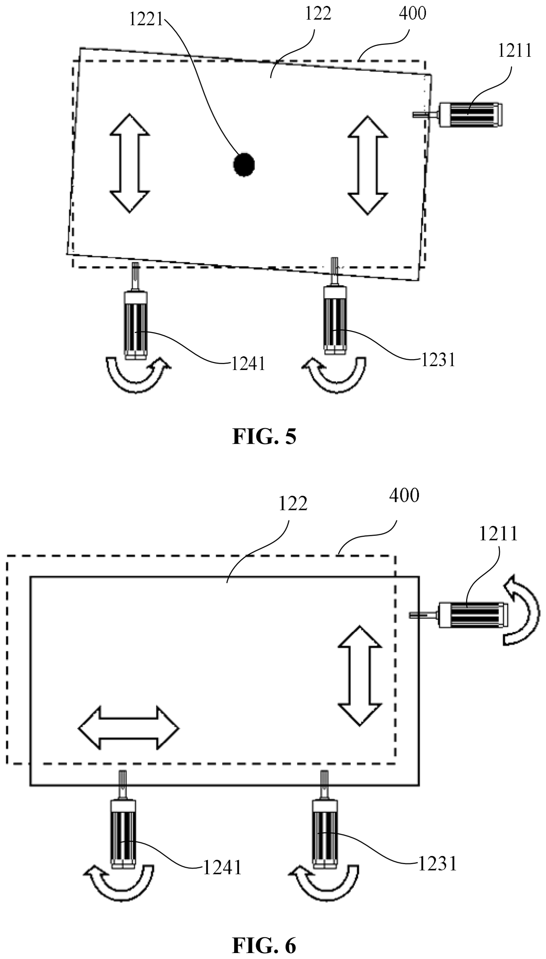

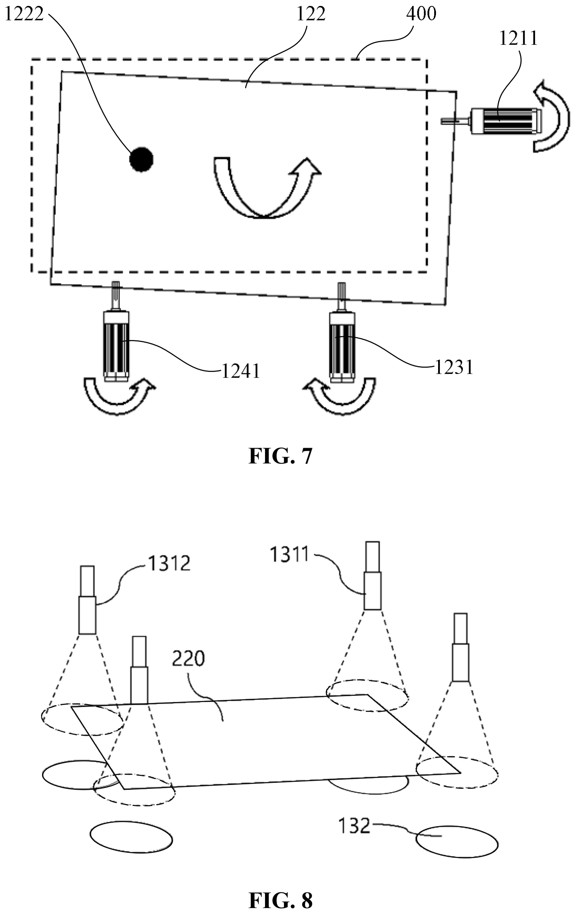

The positions of connection of the second deviation correction motor 1231 and the third deviation correction motor 1241 to the feeding platform 122 are symmetrical about the central axis of the feeding platform 122 that is perpendicular to the first deviation correction direction 310. In the deviation correction process, deviation correction operations of the deviation correction assembly 120 are shown in FIGS. 3 to 7. As shown in FIG. 3, the first deviation correction motor 1211 drives the feeding platform 122 to move along the X direction 340 parallel with the first deviation correction direction 310 to correct the position of the feeding platform 122 to the reference position 400. As shown in FIG. 4, the second deviation correction motor 1231 and the third deviation correction motor 1241 drive the feeding platform 122 in the same direction and with the same magnitude to move along the Y direction 350 parallel with the second deviation correction direction 320 and the third deviation correction direction 330 to correct the position of the feeding platform 122 to the reference position 400. As shown in FIG. 5, the second deviation correction motor 1231 and the third deviation correction motor 1241 drive the feeding platform 122 with different magnitudes or in opposite directions to rotate around the platform center 1221 of the feeding platform 122. As shown in FIG. 6, the first deviation correction motor 1211 drives the feeding platform 122 and the second deviation correction motor 1231 and the third deviation correction motor 1241 drive the feeding platform 122 synchronously in the same direction and with the same magnitude so that the feeding platform 122 moves along the diagonal direction to correct the position of the feeding platform 122 to the reference position 400. As shown in FIG. 7, the first deviation correction motor 1211, the second deviation correction motor 1231, and the third deviation correction motor 1241 drive the feeding platform 122 synchronously (where the second deviation correction motor 1231 and the third deviation correction motor 1241 drive the feeding platform 122 with different magnitudes) to make the feeding platform 122 rotate around an arbitrary point 1222 of the platform to correct the position of the feeding platform 122 to the reference position 400.

In a possible embodiment, the electrode sheet thermal-lamination adjustment mechanism also includes an incoming guide assembly 300. The incoming guide assembly 300 is disposed at a discharge end of the feeding assembly 110. The incoming guide assembly 300 includes a first incoming roller 140 and a second incoming roller 150. The first incoming roller 140 and the second incoming roller 150 are disposed on two sides of the incoming material strip 200a in the thickness direction of the incoming material strip 200a. The first feeding roller 140 and the second feeding roller 150 rotate in opposite directions to deliver the second electrode sheet 220 located between the first feeding roller 140 and the second feeding roller 150 onto the incoming material strip 200a and bring the second electrode sheet 220 into contact with the separator strip 210 on the surface of the incoming material strip 200a.

The feeding assembly 110 includes a first feeder 1101 and a second feeder 1102. The first feeder 1101 and the second feeder 1102 are disposed on two sides of the incoming material strip 200a. The first feeder 1101 conveys the second electrode sheet 220 toward the first feeding roller 140, and the second feeder 1102 conveys the second electrode sheet 220 toward the second feeding roller 150, so that the second electrode sheets 220 are fed from two sides of the incoming material strip 200a along the thickness direction of the incoming material strip 200a and are bonded to the surface of the separator strip 210 of the incoming material strip 200a.

On the other hand, as shown in FIGS. 1 to 11, this application also provides an electrode sheet thermal-lamination device. The electrode sheet thermal-lamination device includes a frame 1 and the electrode sheet thermal-lamination adjustment mechanism. The electrode sheet thermal-lamination adjustment mechanism is mounted on the frame 1.

In a possible embodiment, a thermal-lamination assembly 100 is disposed on the frame 1. The thermal-lamination assembly 100 includes a first thermal-lamination roller 160 and a second thermal-lamination roller 170. The first thermal-lamination roller 160 and the second thermal-lamination roller 170 rotate in opposite directions. The first thermal-lamination roller 160 and the second thermal-lamination roller 170 are disposed on two sides of the incoming material strip 200a along the thickness direction of the incoming material strip 200a to perform hot lamination on the incoming material strip 200a and the second electrode sheets 220 on two sides of the incoming material strip 200a along the thickness direction of the incoming material strip 200a, thereby outputting a laminated material strip 200b and completing the thermal-lamination processing of the electrode sheets.

## Claims

1. An electrode sheet thermal-lamination adjustment mechanism, comprising:
a feeding assembly (110), wherein the feeding assembly (110) comprises a feeding platform (122), a discharge end of the feeding platform (122) faces an incoming material strip (200a), and the incoming material strip (200a) comprises a separator strip (210) and a first electrode sheet (230) disposed within the separator strip (210);
a deviation correction assembly (120), wherein the deviation correction assembly (120) is in transmission connection with the feeding platform (122) to adjust a position of a second electrode sheet (220) on the feeding platform (122), the deviation correction assembly (120) comprises a first deviation correction member (121), a second deviation correction member (123), and a third deviation correction member (124), the first deviation correction member (121) is configured to adjust an adjustment position of the second electrode sheet (220) along an X direction (340), the second deviation correction member (123) and the third deviation correction member (124) are each configured to adjust an adjustment position of the second electrode sheet (220) along a Y direction (350), the second deviation correction member (123) and the third deviation correction member (124) are sequentially disposed along the X direction (340), the X direction (340) is parallel with a conveying direction of the second electrode sheet (220), the Y direction (350) is perpendicular to the conveying direction of the second electrode sheet (220), and the X direction (340) and the Y direction (350) are in a same plane; and
a visual recognition assembly (130), wherein the visual recognition assembly (130) faces the feeding platform (122) and is configured to perform visual recognition on the second electrode sheet (220) on the feeding platform (122), and the visual recognition assembly (130) is connected to the deviation correction assembly (120).

2. The electrode sheet thermal-lamination adjustment mechanism of claim 1, wherein the visual recognition assembly (130) comprises a vision camera (131), the second electrode sheet (220) is rectangular, and any two corners of the second electrode sheet (220) are located within an imaging range (133) of the vision camera (131).

3. The electrode sheet thermal-lamination adjustment mechanism of claim 2, wherein two corners of the second electrode sheet (220) on a same side of the second electrode sheet (220) are located within the imaging range (133) of the vision camera (131).

4. The electrode sheet thermal-lamination adjustment mechanism of claim 3, wherein the vision camera (131) comprises two first cameras (1311), and two corners of the second electrode sheet (220) on a front side of the second electrode sheet (220) along the conveying direction of the second electrode sheet (220) are located within imaging range (133) of the two first cameras (1311) in a one to one manner.

5. The electrode sheet thermal-lamination adjustment mechanism of claim 4, wherein the vision camera (131) further comprises two second cameras (1312), and two corners of the second electrode sheet (220) on a rear side of the second electrode sheet (220) along the conveying direction of the second electrode sheet (220) are located within imaging ranges (133) of the two second cameras (1312) in a one to one manner.

6. The electrode sheet thermal-lamination adjustment mechanism of claim 2, wherein the visual recognition assembly (130) further comprises an imaging light source (132), the vision camera (131) and the imaging light source (132) are disposed inside a housing of the feeding assembly (110), and the vision camera (131) and the imaging light source (132) are spaced apart to form a gap for the second electrode sheet (220) to pass through.

7. The electrode sheet thermal-lamination adjustment mechanism of any one of claims 1 to 6, wherein the feeding assembly (110) further comprises a body (1100) and a first driving member (1220), the feeding platform (122) is movably disposed on the body (1100), and the first driving member (1220) is configured to drive the feeding platform (122) to move to convey the second electrode sheet (220) to the incoming material strip (200a).

8. The electrode sheet thermal-lamination adjustment mechanism of claim 7, wherein the feeding assembly (110) further comprises a second driving member (1250) and a feeding clamp (125), the feeding clamp (125) is disposed between the feeding platform (122) and the incoming material strip (200a), and the second driving member (1250) is configured to drive the feeding clamp (125) to clamp or release the second electrode sheet (220) to convey the second electrode sheet (220) on the feeding platform (122) to the incoming material strip (200a).

9. The electrode sheet thermal-lamination adjustment mechanism of any one of claims 1 to 6, further comprising an incoming guide assembly (300), wherein the incoming guide assembly (300) is disposed at a discharge end of the feeding assembly (110), the incoming guide assembly (300) comprises a first incoming roller (140) and a second incoming roller (150), and the first incoming roller (140) and the second incoming roller (150) are disposed on two sides of the incoming material strip (200a) in a thickness direction of the incoming material strip (200a).

10. An electrode sheet thermal-lamination device, comprising: the electrode sheet thermal-lamination adjustment mechanism of any one of claims 1 to 9, and further comprising a frame (1), wherein the electrode sheet thermal-lamination adjustment mechanism is mounted on the frame (1).
